# EUROPÄISCHE PATENTSCHRIFT

(11) **EP 3 830 944 B1**
(45) Veröffentlichungstag und Bekanntmachung des Hinweises auf die Patenterteilung: **06.05.2026**
(21) Anmeldenummer: 18785841.0
(22) Anmeldetag: 25.09.2018
(51) Int. Cl.: H02M 7/483, H02J 3/36

(54) **SCHALTBARE LÄNGSSPANNUNGSQUELLE, GLEICHSTROMÜBERTRAGUNGSSYSTEM MIT LÄNGSSPANNUNGSQUELLE UND VERFAHREN ZUM BETREIBEN EINER LÄNGSSPANNUNGSQUELLE**
SWITCHABLE LONGITUDINAL VOLTAGE SOURCE, DC TRANSMISSION SYSTEM WITH LONGITUDINAL VOLTAGE SOURCE, AND METHOD FOR OPERATING A LONGITUDINAL VOLTAGE SOURCE
SOURCE DE TENSION LONGITUDINALE COMMUTABLE, SYSTÈME DE TRANSMISSION DE COURANT CONTINU POURVU DE LA SOURCE DE TENSION LONGITUDINALE ET PROCÉDÉ POUR FAIRE FONCTIONNER UNE SOURCE DE TENSION LONGITUDINALE

(43) Veröffentlichungstag der Anmeldung: 09.06.2021
(73) Patentinhaber: Siemens Energy Global GmbH & Co. KG, 81739 München (DE)
(72) Erfinder: SCHÖN, Andre, 91058 Erlangen (DE); BAKRAN, Mark-Matthias, 91052 Erlangen (DE); HOFMANN, Viktor, 95448 Bayreuth (DE)
(86) Internationale Anmeldenummer: PCT/EP2018/076001
(87) Internationale Veröffentlichungsnummer: WO 2020/064091

(56) Entgegenhaltungen:
- EP-A1- 2 845 288
- EP-A2- 1 035 637
- WO-A1-2017/102414
- WO-A1-2017/108073

## Beschreibung

Die Erfindung bezieht sich unter anderem auf eine schaltbare Längsspannungsquelle mit den Merkmalen gemäß dem Oberbegriff des Patentanspruchs 1. Eine derartige Längsspannungsquelle ist aus der Druckschrift WO 2017/108073 A1 bekannt. Die vorbekannte Längsspannungsquelle weist zwei H-Brückenmodule mit jeweils vier Halbleiterschaltern auf.

Aus der Schrift WO 2017/102414 A1 sind eine Ladeschaltung und ein Ladeverfahren für ein elektrisches Energiespeichersystem bekannt. Die Ladeschaltung weist einen ersten Eingang und einen zweiten Eingang zur elektrischen Verbindung mit einer Energiequelle sowie einen ersten Ausgang und einen zweiten Ausgang zur elektrischen Verbindung mit einer elektrischen Komponente, die während des Ladebetriebs mit Energie versorgt werden soll, auf.

Die Offenlegungsschrift EP 1 035 637 A2 offenbart ein Stromversorgungssystem, welches schaltbar verbundene Kondensatoren aufweist. Dabei wird eine kleine Anzahl an Schaltern verwendet. Diese Schalter werden so angesteuert, dass die entstehenden Schaltverluste reduziert werden.

Der Erfindung liegt die Aufgabe zugrunde, eine Anordnung mit einer schaltbaren Längsspannungsquelle anzugeben, die mit besonders wenigen Bauelementen auskommt.

Diese Aufgabe wird erfindungsgemäß durch eine Anordnung mit einer schaltbaren Längsspannungsquelle mit den Merkmalen gemäß Patentanspruch 1 gelöst. Vorteilhafte Ausgestaltungen der erfindungsgemäßen Längsspannungsquelle sind in Unteransprüchen angegeben.

Danach ist erfindungsgemäß vorgesehen, dass der Längsspannungsquelle eine Umpoleinrichtung nachgeordnet ist, die zwischen die zwei Ausgangsanschlüsse und zwei Leiteranschlusskontakte der Längsspannungsquelle geschaltet ist, wobei die Umpoleinrichtung in einer ersten Stellung den ersten Ausgangsanschluss mit dem ersten Leiteranschlusskontakt und den zweiten Ausgangsanschluss mit dem zweiten Leiteranschlusskontakt verbindet und wobei die Umpoleinrichtung in einer zweiten Stellung den ersten Ausgangsanschluss mit dem zweiten Leiteranschlusskontakt und den zweiten Ausgangsanschluss mit dem ersten Leiteranschlusskontakt verbindet.

Wenn im Folgenden von einer erfindungsgemäßen Längsspannungsquelle die Rede ist, ist damit stets auf eine Längsspannungsquelle als Teil der erfindungsgemäßen Anordnung Bezug genommen.

Ein wesentlicher Vorteil der erfindungsgemäßen Längsspannungsquelle ist darin zu sehen, dass diese mit relativ wenigen Schaltern auskommt bzw. auskommen kann und dabei dennoch eine Verteilung von Strom bzw. eine Lastflussverteilung auf beispielsweise zwei nachgeordnete Hochspannungsgleichstromübertragungsleitungen eines Gleichspannungsübertragungssystems ermöglicht.

Vorteilhaft ist es, wenn die zweite Schalteinrichtung, die erste Schalteinheit und der erste Schalter jeweils durch ein von außen steuerbares Ventil gebildet ist oder ein oder mehrere von außen steuerbare Ventile aufweist.

Bei den von außen steuerbaren Ventilen handelt es sich vorzugsweise um ein- und ausschaltbare Ventile, vorzugsweise um mechanische Schalter oder um Transistoren mit einer dazu antiparallel geschalteten Diode.

Der erste und zweite Schalter, die erste und zweite Schalteinheit und die erste und zweite Schalteinrichtung sind vorzugsweise jeweils unipolar schaltend.

Mit Blick auf den Einsatz möglichst vieler baugleicher Komponenten ist es vorteilhaft, wenn der erste und zweite Schalter baugleich sind und/oder die erste und zweite Schalteinheit baugleich sind und/oder die erste und zweite Schalteinrichtung baugleich sind und/oder Schalter der ersten Schalteinrichtung mit dem oder den Schaltern der zweiten Schalteinheit baugleich sind und/oder Schalter der ersten Schalteinrichtung mit dem zweiten Schalter baugleich sind und/oder Schalter der zweiten Schalteinheit mit dem zweiten Schalter baugleich sind.

Bei einer besonders bevorzugten Ausgestaltung ist vorgesehen, dass die erste und zweite Schalteinheit jeweils durch einen Schalter oder zwei oder mehr in Reihe liegende Schalter gebildet ist, die erste und zweite Schalteinrichtung jeweils durch zwei oder mehr in Reihe liegende Schalter gebildet ist, und die erste und zweite Schalteinrichtung jeweils einen Schalter mehr aufweisen als die erste und zweite Schalteinheit. Alle letztgenannten Schalter sind vorzugsweise jeweils unipolar schaltend.

Bei einer anderen vorteilhaften Ausgestaltung ist vorgesehen, dass zumindest einer der Schalter der Längsspannungsquelle durch ein nichtsteuerbares Ventil, insbesondere allein durch eine Diode, gebildet ist. Vorteilhaft ist es insbesondere, wenn zumindest einer der Schalter, vorzugsweise alle Schalter, der ersten Schalteinrichtung, durch ein nichtsteuerbares Ventil, insbesondere eine Diode, gebildet ist, zumindest einer der Schalter, vorzugsweise alle Schalter, der zweiten Schalteinheit durch ein nichtsteuerbares Ventil, insbesondere eine Diode, gebildet ist, und/oder der zweite Schalter durch ein nichtsteuerbares Ventil, insbesondere eine Diode, gebildet ist.

Die Erfindung bezieht sich darüber hinaus auf eine Längsspannungsquellenkaskade. Bezüglich einer solchen Längsspannungsquellenkaskade ist erfindungsgemäß vorgesehen, dass diese zwei oder mehr Längsspannungsquellen, wie oben beschrieben, aufweist. Bezüglich der Vorteile der erfindungsgemäßen Längsspannungsquellenkaskade sei auf die obigen Ausführungen im Zusammenhang mit der erfindungsgemäßen Längsspannungsquelle verwiesen.

Vorteilhaft ist es, wenn ein erster Eingang der Längsspannungsquellenkaskade durch einen ersten Einspeiseanschluss der ersten Längsspannungsquelle der Längsspannungsquellenkaskade gebildet wird, ein zweiter Eingang der Längsspannungsquellenkaskade durch einen zweiten Einspeiseanschluss der ersten Längsspannungsquelle der Längsspannungsquellenkaskade gebildet wird, ein erster Ausgang der Längsspannungsquellenkaskade durch einen ersten Ausgangsanschluss der letzten Längsspannungsquelle der Längsspannungsquellenkaskade gebildet wird, ein zweiter Ausgang der Längsspannungsquellenkaskade durch einen zweiten Ausganganschluss der letzten Längsspannungsquelle der Längsspannungsquellenkaskade gebildet wird, jeder Längsspannungsquelle mit Ausnahme der letzten jeweils eine Längsspannungsquelle nachgeordnet ist, wobei der erste Einspeiseanschluss jeder nachgeordneten Längsspannungsquelle mit dem ersten Ausgangsanschluss der vorgeordneten Längsspannungsquelle verbunden ist und der zweite Einspeiseanschluss jeder nachgeordneten Längsspannungsquelle mit dem zweiten Ausgangsanschluss der vorgeordneten Längsspannungsquelle verbunden ist.

Auch ist es von Vorteil, wenn die Spannungsfestigkeit der Schalteinrichtungen und Schalteinheiten der Längsspannungsquellen der Längsspannungsquellenkaskade von Längsspannungsquelle zu Längsspannungsquelle jeweils um die Sperrspannung des Energiespeichers der Längsspannungsquellen ansteigt.

Vorzugsweise steigt die Anzahl der Schalter pro Schalteinheit und Schalteinrichtung von Längsspannungsquelle zu Längsspannungsquelle jeweils um einen Schalter an.

Die Erfindung bezieht sich darüber hinaus auf ein Gleichstromübertragungssystem. Bezüglich eines solchen Gleichstromübertragungssystems ist erfindungsgemäß vorgesehen, dass dieses zumindest eine Längsspannungsquelle, wie oben beschrieben, und/oder eine Längsspannungsquellenkaskade, wie oben beschrieben, sowie eine erste und eine zweite Hochspannungsgleichstromübertragungsleitung aufweist, die an die Ausgangsanschlüsse der Längsspannungsquelle bzw. die Ausgänge der Längsspannungsquellenkaskade angeschlossen ist.

Bezüglich der Vorteile des erfindungsgemäßen Gleichstromübertragungssystems sei auf die obigen Ausführungen im Zusammenhang mit der erfindungsgemäßen Längsspannungsquelle verwiesen.

Die Erfindung bezieht sich darüber hinaus auf ein Verfahren zum Betreiben einer Längsspannungsquelle, einer Längsspannungsquellenkaskade oder eines Gleichstromübertragungssystems, wie oben beschrieben, wobei der Energiespeicher entweder zwischen den ersten Einspeiseanschluss und den ersten Ausgangsanschluss der Längsspannungsquelle oder Längsspannungsquellen oder zwischen den zweiten Einspeiseanschluss und den zweiten Ausgangsanschluss der Längsspannungsquelle oder Längsspannungsquellen geschaltet wird oder von allen diesen Anschlüssen getrennt wird.

Bezüglich der Vorteile des erfindungsgemäßen Verfahrens sei auf die obigen Ausführungen im Zusammenhang mit der erfindungsgemäßen Längsspannungsquelle verwiesen.

Die Erfindung wird nachfolgend anhand von Ausführungsbeispielen näher erläutert; dabei zeigen beispielhaft
- Figur 1: ein Ausführungsbeispiel für ein erfindungsgemäßes Gleichstromübertragungssystem, das mit einem Ausführungsbeispiel für eine erfindungsgemäße Längsspannungsquelle ausgestattet ist,
- Figur 2: einen ersten Betriebszustand der Längsspannungsquelle gemäß Figur 1,
- Figur 3: einen zweiten Betriebszustand der Längsspannungsquelle gemäß Figur 1,
- Figur 4: einen dritten Betriebszustand der Längsspannungsquelle gemäß Figur 1,
- Figur 5: ein Ausführungsbeispiel für eine für das Gleichstromübertragungssystem gemäß Figur 1 geeignete Längsspannungsquelle näher im Detail,
- Figur 6: ein Ausführungsbeispiel für ein Gleichstromübertragungssystem, bei dem einer Längsspannungsquelle eine Umpoleinrichtung nachgeordnet ist,
- Figur 7: ein Ausführungsbeispiel für ein Gleichstromübertragungssystem mit einer Längsspannungsquellenkaskade, und
- Figur 8: eine Variante des Ausführungsbeispiels gemäß Figur 5, bei der einige Schalter als nicht steuerbare Ventile in Form einer Diode ausgeführt sind.

In den Figuren werden der Übersicht halber für identische oder vergleichbare Komponenten stets dieselben Bezugszeichen verwendet.

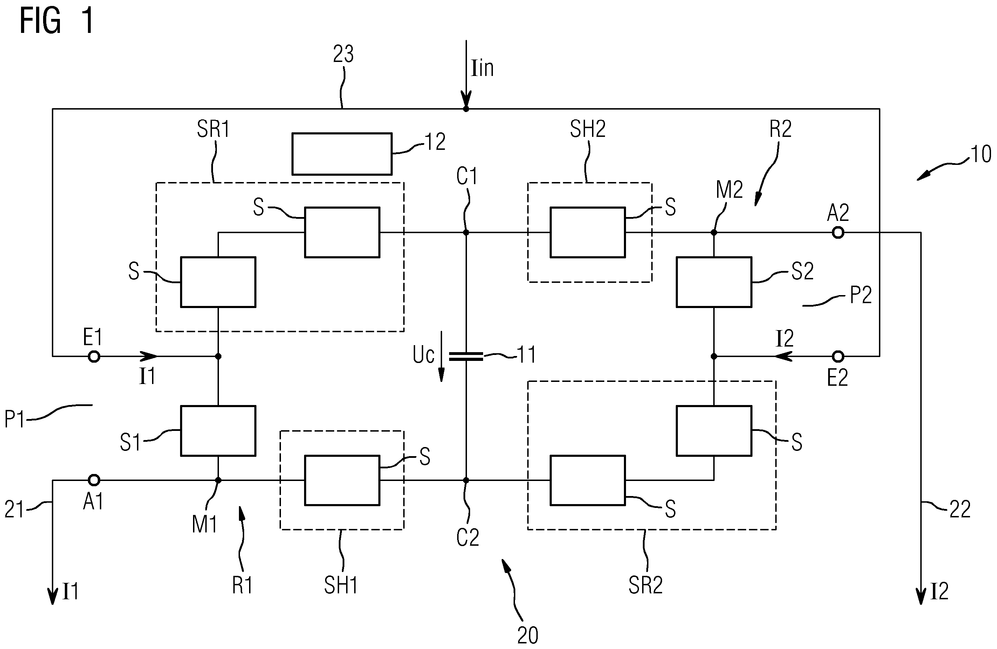

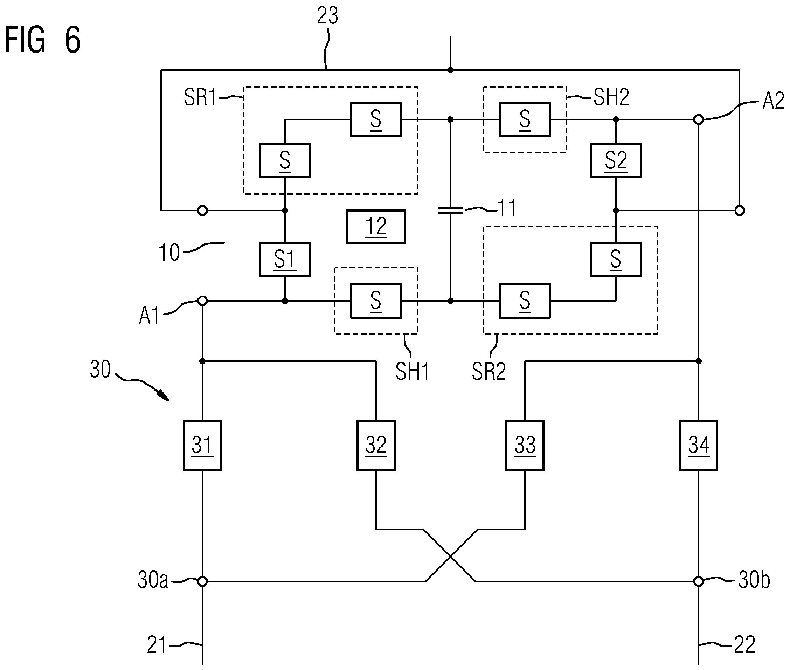

Die mit Bezug auf die Figuren 1 bis 5 beschriebenen Ausführungsbeispiele dienen der Erläuterung des Aufbaus und der Funktion der jeweiligen Komponenten. Aus diesem Grund wird auf die Darstellung und die Beschreibung der Umpoleinrichtung zunächst verzichtet. Eine Längsspannungsquelle mit Umpoleinrichtung ist mit Bezug auf die Figur 6 beschrieben.

Die Figur 1 zeigt ein Ausführungsbeispiel für eine schaltbare Längsspannungsquelle 10. Die Längsspannungsquelle 10 umfasst einen ersten Einspeiseanschluss E1 zum Einspeisen eines ersten Stroms I1, einen ersten Ausgangsanschluss A1 zum Ausgeben des ersten Stroms I1, einen zweiten Einspeiseanschluss E2 zum Einspeisen eines zweiten Stroms I2 und einen zweiten Ausgangsanschluss A2 zum Ausgeben des zweiten Stroms I2.

Die Längsspannungsquelle 10 ermöglicht es, eine elektrische Spannung Uc eines elektrischen Energiespeichers 11 der Längsspannungsquelle 10 wahlweise zwischen den ersten Einspeiseanschluss E1 und den ersten Ausgangsanschluss A1 oder zwischen den zweiten Einspeiseanschluss E2 und den zweiten Ausgangsanschluss A2 zu schalten. Zu diesem Zweck ist der erste Einspeiseanschluss E1 mittels einer ersten Schalteinrichtung SR1 mit einem ersten Anschluss C1 des Energiespeichers 11 verbindbar, der zweite Einspeiseanschluss E2 ist mittels einer zweiten Schalteinrichtung SR2 mit dem zweiten Anschluss C2 des Energiespeichers 11 verbindbar.

An den ersten Einspeiseanschluss E1 der Längsspannungsquelle 10 ist eine erste Reihenschaltung R1 angeschlossen, die einen ersten Schalter S1 und eine erste Schalteinheit SH1 umfasst und den ersten Einspeiseanschluss E1 mit dem zweiten Anschluss C2 des Energiespeichers 11 verbindet.

Einer der Anschlüsse des ersten Schalters S1, nachfolgend erster Anschluss des ersten Schalters S1 genannt, bildet einen äußeren Anschluss der ersten Reihenschaltung R1 sowie den ersten Einspeiseanschluss E1; einer der Anschlüsse der ersten Schalteinheit SH1, nachfolgend erster Anschluss der ersten Schalteinheit SH1 genannt, bildet einen zweiten äußeren Anschluss der ersten Reihenschaltung R1 und ist mit dem zweiten Anschluss C2 des Energiespeichers 11 verbunden. Zwischen dem anderen Anschluss des ersten Schalters S1, nachfolgend zweiter Anschluss des ersten Schalters S1 genannt, und dem anderen Anschluss der ersten Schalteinheit SH1, nachfolgend zweiter Anschluss der ersten Schalteinheit SH1 genannt, liegt elektrisch ein Mittenanschluss M1 der ersten Reihenschaltung R1, der unmittelbar den ersten Ausgangsanschluss A1 der Längsspannungsquelle 10 bildet.

An den zweiten Einspeiseanschluss E2 ist eine zweite Reihenschaltung R2 angeschlossen, die einen zweiten Schalter S2 und eine zweite Schalteinheit SH2 umfasst und den zweiten Einspeiseanschluss E2 mit dem ersten Anschluss C1 des Energiespeichers 11 verbindet. Einer der Anschlüsse des zweiten Schalters S2, nachfolgend erster Anschluss des zweiten Schalters S2 genannt, bildet einen ersten äußeren Anschluss der zweiten Reihenschaltung R2 sowie den zweiten Einspeiseanschluss E2 der Längsspannungsquelle 10; einer der Anschlüsse der zweiten Schalteinheit SH2, nachfolgend erster Anschluss der zweiten Schalteinheit SH2 genannt, bildet einen zweiten äußeren Anschluss der zweiten Reihenschaltung R2 und ist mit dem ersten Anschluss C1 des Energiespeichers 11 verbunden. Zwischen dem anderen Anschluss des zweiten Schalters S2, nachfolgend zweiter Anschluss des zweiten Schalters S2 genannt, und dem anderen Anschluss der zweiten Schalteinheit SH2, nachfolgend zweiter Anschluss der zweiten Schalteinheit SH2 genannt, liegt elektrisch ein Mittenanschluss M2 der zweiten Reihenschaltung R2. Der Mittenanschluss M2 der zweiten Reihenschaltung R2 bildet unmittelbar den zweiten Ausgangsanschluss A2 der Längsspannungsquelle 10.

Bei dem Ausführungsbeispiel gemäß Figur 1 bestehen die Schalteinrichtungen SR1 und SR2 jeweils aus zwei Schaltern S; die beiden Schalteinheiten SH1 und SH2 bestehen jeweils aus einem Schalter S.

An die beiden Ausgangsanschlüsse A1 und A2 der Längsspannungsquelle 10 können Hochspannungsgleichstromübertragungsleitungen 21 und 22 eines Gleichstromübertragungssystems 20 angeschlossen sein und an die beiden Einspeiseanschlüsse E1 und E2 der Längsspannungsquelle 10 kann eine Einspeiseleitung 23 zum Einspeisen eines Eingangsstromes Iin angeschlossen sein, wie dies beispielhaft in der Figur 1 gezeigt ist.

Der in der Einspeiseleitung 23 fließende Eingangsstrom Iin wird in den ersten Strom I1 und den zweiten Strom I2 aufgeteilt, die am ersten Einspeiseanschluss E1 und am zweiten Einspeiseanschluss E2 in die Längsspannungsquelle 10 einfließen.

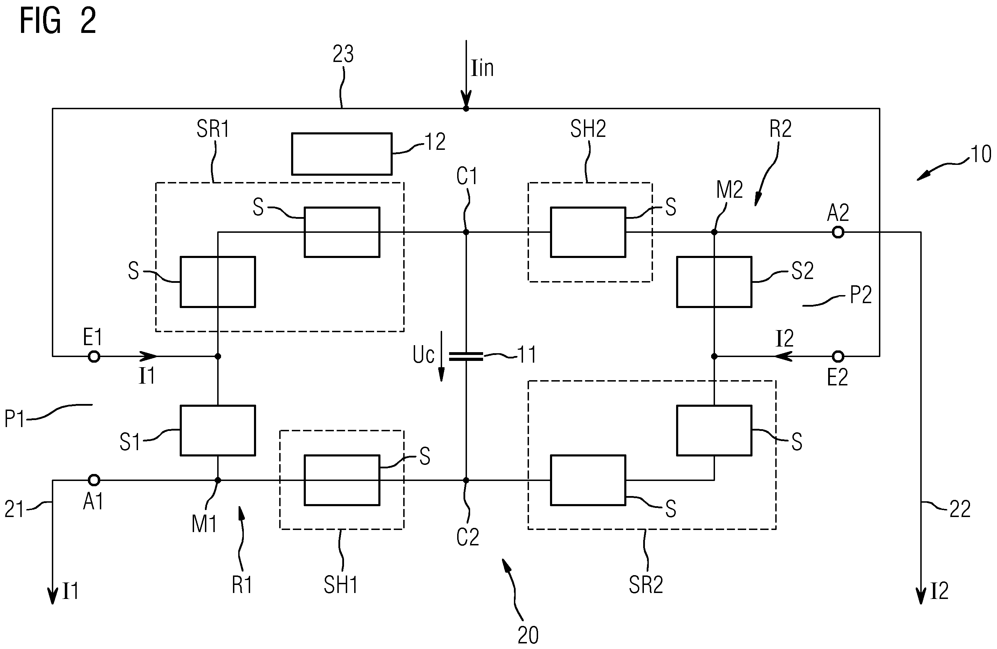

Um eine gewünschte Strom- bzw. Lastverteilung des Eingangsstromes Iin bzw. der an den beiden Einspeiseanschlüssen E1 und E2 der Längsspannungsquelle 10 eingespeisten Ströme I1 und I2 auf die beiden Ausgangsanschlüsse A1 und A2 und damit eine korrespondierende Stromverteilung in den beiden Hochspannungsgleichstromübertragungsleitungen 21 und 22 zu erreichen, können die beiden Schalter S1 und S2, die beiden Schalteinheiten SH1 und SH2 und die beiden Schalteinrichtungen SR1 und SR2 drei Betriebszustände der Längsspannungsquelle 10 ermöglichen; dies wird nachfolgend beispielhaft näher im Zusammenhang mit den Figuren 2 bis 4 erläutert.

Die Figur 2 zeigt einen ersten Betriebszustand der Längsspannungsquelle 10, bei dem die Schalter S der ersten Schalteinrichtung SR1, der zweite Schalter S2 und die erste Schalteinheit SH1 eingeschaltet sind; der erste Schalter S1, die zweite Schalteinheit SH2 und die zweite Schalteinrichtung SR2 sind ausgeschaltet.

Bei dem ersten Betriebszustand gemäß der Figur 2 wird die an dem Energiespeicher 11, bei dem es sich vorzugsweise um einen Kondensator C handelt, abfallende elektrische Spannung Uc in den Strompfad P1 zwischen dem ersten Einspeiseanschluss E1 und dem ersten Ausgangsanschluss A1 geschaltet; der zweite Strompfad P2 zwischen dem zweiten Einspeiseanschluss E2 und dem zweiten Ausgangsanschluss A2 führt an dem elektrischen Energiespeicher 11 vorbei, so dass dieser die elektrische Spannung Uc des Energiespeichers 11 nicht sieht.

Je nach dem Vorzeichen der Spannung Uc am Energiespeicher 11 bzw. der Spannungsrichtung der Spannung Uc am Energiespeicher 11 wird der Spannungsabfall zwischen dem ersten Einspeiseanschluss E1 und dem ersten Ausgangsanschluss A1 durch die Spannung Uc erhöht oder reduziert.

Je nach der Spannungsrichtung der am Energiespeicher 11 anliegenden Spannung Uc wird somit der erste Strom I1 im ersten Strompfad P1 zwischen dem ersten Einspeiseanschluss E1 und dem ersten Ausgangsanschluss A1 gegenüber dem Strom I2 im zweiten Strompfad P2 zwischen dem zweiten Einspeiseanschluss E2 und dem zweiten Ausgangsanschluss A2 erhöht oder erniedrigt, wodurch es zu einer entsprechenden Lastverschiebung bzw. Veränderung der Laststromverteilung des Eingangsstroms Iin in der Einspeiseleitung 23 auf die beiden Hochspannungsgleichstromübertragungsleitungen 21 und 22 des Gleichstromübertragungssystems 20 kommt.

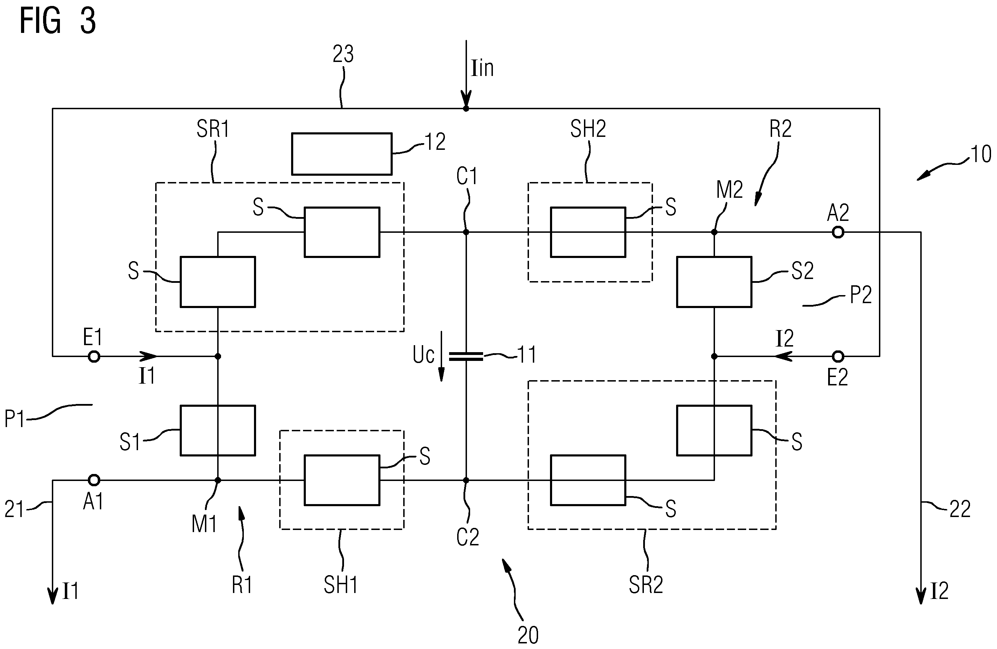

In einem zweiten Betriebszustand der Längsspannungsquelle 10 wird der Energiespeicher 11 in den zweiten Strompfad P2 zwischen dem zweiten Einspeiseanschluss E2 und dem zweiten Ausgangsanschluss A2 geschaltet; der erste Strompfad P1 wird an dem Energiespeicher vorbeigeführt. Der zweite Betriebszustand ist in der Figur 3 gezeigt.

Die Figur 3 lässt erkennen, dass für den zweiten Betriebszustand der erste Schalter S1, die zweite Schalteinrichtung SR2 und die zweite Schalteinheit SH2 eingeschaltet werden, die übrigen Schaltkomponenten sind ausgeschaltet. Je nach dem Vorzeichen der Spannung bzw. der Spannungsrichtung der Spannung Uc am Energiespeicher 11 wird somit der Strom I2 im zweiten Strompfad P2 gegenüber dem Strom I1 im ersten Strompfad P1 erhöht oder erniedrigt, so dass es zu einer entsprechenden Laststromverschiebung des Eingangsstroms Iin in der Einspeiseleitung 23 auf die zwei Hochspannungsgleichstromübertragungsleitungen 21 und 22 des Gleichstromübertragungssystems 20 kommt.

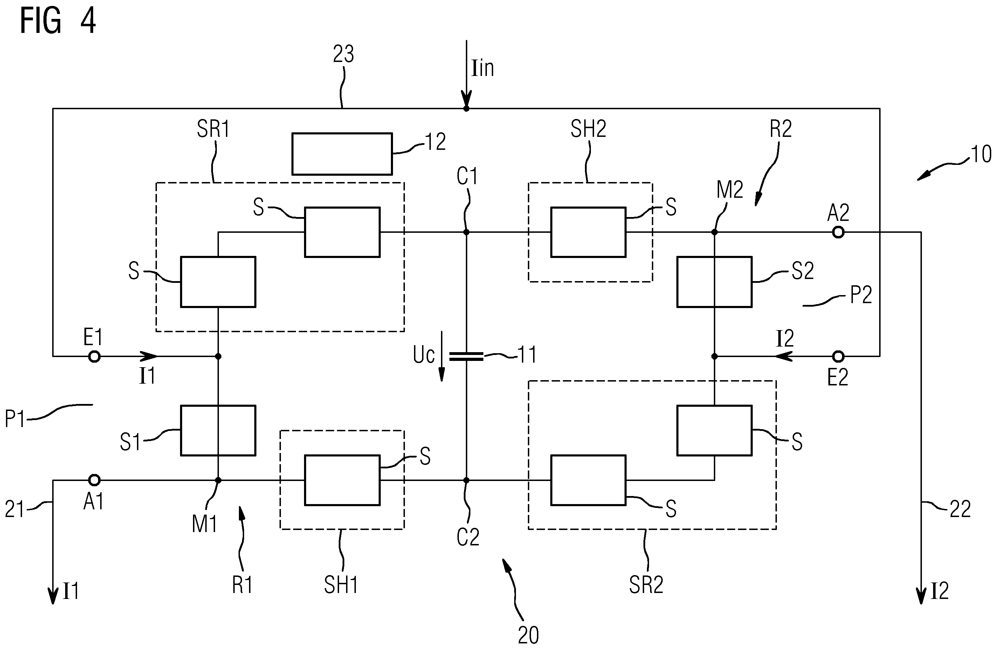

Die Figur 4 zeigt einen dritten Betriebszustand der Längsspannungsquelle 10. Bei dem dritten Betriebszustand sind der erste Schalter S1 und der zweite Schalter S2 eingeschaltet; die übrigen Schaltkomponenten sind ausgeschaltet. Bei dem dritten Betriebszustand gemäß Figur 4 ist der Energiespeicher 11 bzw. dessen Spannung Uc von den beiden Strompfaden P1 und P2 getrennt, so dass die Spannung Uc keinen Einfluss auf die Stromverteilung hat.

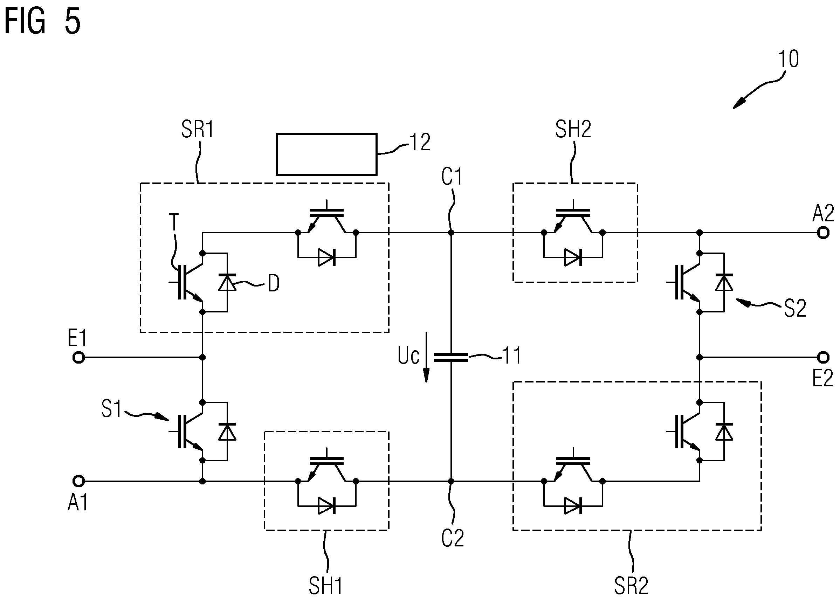

Die Figur 5 zeigt ein Ausführungsbeispiel für den Aufbau einer Längsspannungsquelle 10, die bei dem Gleichstromübertragungssystem 20 gemäß den Figuren 1 bis 4 eingesetzt werden kann. Bei den Schaltern S1 und S2, den Schaltern der Schalteinrichtungen SR1 und SR2 und den Schaltern der Schalteinheiten SH1 und SH2 handelt es sich um von außen schaltbare, unipolar arbeitende Halbleiterschalter. Es lässt sich erkennen, dass die Schalter jeweils durch einen Transistor T, der von einer Steuereinrichtung 12 angesteuert wird, und eine dazu antiparallel geschaltete Diode D gebildet ist. Jeder der Schalter ist somit von der Steuereinrichtung 12 nur in unipolarer Richtung ein- und ausschaltbar; in der entgegengesetzten Stromrichtung bildet die Diode D jeweils einen Freilauf.

Durch die in der Figur 5 gezeigte Verschaltung der Dioden D und der Transistoren T ergibt sich, dass eine Lastflussregelung nur in einer Richtung, also unidirektional, möglich ist; denn der Energiespeicher 11 sollte stets mit einer positiven Spannung Uc in der in der Figur 5 gezeigten Spannungsrichtung betrieben werden, um zu vermeiden, dass es im ersten und zweiten Betriebszustand zu einem Kurzschluss des Energiespeichers 11 über die Freilaufdioden D kommen kann.

Zur Vorbereitung des Betriebs der Längsspannungsquelle 10 wird die Steuereinrichtung 12 die Spannung Uc am Energiespeicher 11 zunächst auf einen gewünschten Ausgangswert von beispielsweise + 2 kV stellen.

Tritt anschließend während des Betriebs des Gleichstromübertragungssystems 20 die Situation auf, dass die Stromverteilung in Richtung des ersten Ausgangsanschlusses A1 und des zweiten Ausgangsanschlusses A2 unsymmetrisch ist und der Lastfluss im ersten Strompfad P1 stets größer als im zweiten Strompfad P2 ist, so kann durch ein temporäres, abwechselndes Einschalten (beispielsweise im Rahmen einer Pulsweitenmodulation) des ersten und zweiten Betriebszustands der Energiespeicher 11 in positiver Spannungsrichtung in den ersten Strompfad P1 oder in negativer Spannungsrichtung in den zweiten Strompfad P2 geschaltet werden, wodurch es in beiden Fällen jeweils zu einem Verschieben des Lastflusses von dem ersten Strompfad in Richtung des zweiten Strompfades kommt. Da der Energiespeicher 11 im ersten Betriebszustand aufgeladen wird und im zweiten entladen wird, kann bei gleichen oder zumindest annähernd gleichen Zeitdauern für den ersten und zweiten Betriebszustand im Rahmen der Pulsweitenmodulation der Ladezustand des Energiespeichers 21 konstant gehalten werden.

Die Länge der ersten und zweiten Betriebszustände (sowie die Länge des jeweils dazwischen liegenden dritten Betriebszustands) und die Arbeitsspannungshöhe des Energiespeichers 11 bestimmen das Ausmaß der Lastflussänderung bzw. der Lastflussverschiebung zugunsten des ersten Strompfads.

Die Figur 6 zeigt ein Ausführungsbeispiel für ein Gleichstromübertragungssystem 20, bei dem einer Längsspannungsquelle 10 eine Umpoleinrichtung 30 nachgeordnet ist. Die Umpoleinrichtung 30 liegt elektrisch zwischen den beiden Ausgangsanschlüssen A1 und A2 der Längsspannungsquelle 10 und den beiden Hochspannungsgleichstromübertragungsleitungen 21 und 22 des Gleichstromübertragungssystems 20.

Die Umpoleinrichtung 30 gemäß Figur 6 weist vier Schalter 31, 32, 33 und 34 auf, die in einer ersten Stellung den ersten Ausgangsanschluss A1 der Längsspannungsquelle 10 mit dem ersten Leiteranschlusskontakt 30a der Umpoleinrichtung 30 und damit mit der ersten Hochspannungsgleichstromübertragungsleitung 21 und den zweiten Ausgangsanschluss A2 der Längsspannungsquelle 10 mit einem zweiten Leiteranschlusskontakt 30b der Umpoleinrichtung 30 und damit mit der zweiten Hochspannungsgleichstromübertragungsleitung 22 des Gleichstromübertragungssystems 20 verbindet.

In einer inversen bzw. zweiten Stellung der Umpoleinrichtung 30 wird der erste Ausgangsanschluss A1 der Längsspannungsquelle 10 mit dem zweiten Leiteranschlusskontakt 30b der Umpoleinrichtung 30 und damit mit der zweiten Hochspannungsgleichstromübertragungsleitung 22 des Gleichstromübertragungssystems 20 und der zweite Ausgangsanschluss A2 der Längsspannungsquelle 10 mit dem ersten Leiteranschlusskontakt 30a der Umpoleinrichtung 30 bzw. mit der ersten Hochspannungsgleichstromübertragungsleitung 21 verbunden.

Die Umpoleinrichtung 30 ermöglicht mit nur einer unidirektional arbeitenden Längsspannungsquelle 10 eine bidirektionale Lastflussregelung, wobei durch Auswahl der ersten oder zweiten Stellung der Umpoleinrichtung 30 die Lastflussrichtung eingestellt wird.

Mit Blick auf minimale elektrische Verluste wird es als vorteilhaft angesehen, wenn die vier Schalter 31, 32, 33 und 34 der Umpoleinrichtung 30 mechanische Schalter sind, da diese im durchgeschalteten Zustand sehr geringe elektrische Verluste verursachen, zumindest weniger als Halbleiterschalter, wie sie im Zusammenhang mit der Figur 5 gezeigt sind.

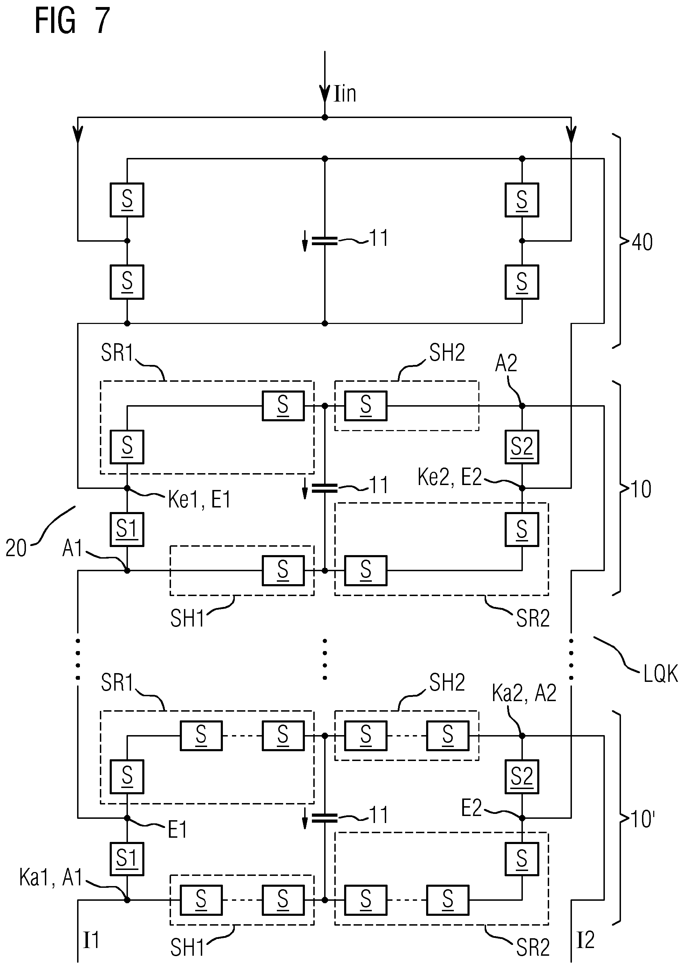

Die Figur 7 zeigt ein Ausführungsbeispiel für ein Gleichstromübertragungssystem 20, bei dem eine Vielzahl an Längsspannungsquellen, vorzugsweise solche gemäß den Figuren 1 bis 6, eine Längsspannungsquellenkaskade LQK bildet. Von den Längsspannungsquellen der Längsspannungsquellenkaskade LQK sind aus Gründen der Übersicht nur zwei gezeigt, nämlich die erste, die mit dem Bezugszeichen 10 gekennzeichnet ist, und die letzte, die mit dem Bezugszeichen 10' gekennzeichnet ist.

Ein erster Eingang Ke1 der Längsspannungsquellenkaskade LQK wird durch einen ersten Einspeiseanschluss E1 der ersten Längsspannungsquelle 10 der Längsspannungsquellenkaskade LQK gebildet. Ein zweiter Eingang Ke2 der Längsspannungsquellenkaskade LQK wird durch einen zweiten Einspeiseanschluss E2 der ersten Längsspannungsquelle 10 der Längsspannungsquellenkaskade LQK gebildet. Ein erster Ausgang Ka1 der Längsspannungsquellenkaskade LQK wird durch einen ersten Ausgangsanschluss A1 der letzten Längsspannungsquelle 10' der Längsspannungsquellenkaskade gebildet, und ein zweiter Ausgang Ka2 der Längsspannungsquellenkaskade LQK wird durch einen zweiten Ausgangsanschluss A2 der letzten Längsspannungsquelle 10' der Längsspannungsquellekaskade LQK gebildet.

Jeder Längsspannungsquelle der Längsspannungsquellenkaskade LQK ist - mit Ausnahme der letzten - jeweils eine Längsspannungsquelle nachgeordnet, wobei der erste Einspeiseanschluss E1 jeder nachgeordneten Längsspannungsquelle mit dem ersten Ausgangsanschluss A1 der vorgeordneten Längsspannungsquelle verbunden ist und der zweite Einspeiseanschluss E2 jeder nachgeordneten Längsspannungsquelle mit dem zweiten Ausgangsanschluss A2 der vorgeordneten Längsspannungsquelle verbunden ist.

Der Figur 7 lässt sich entnehmen, dass die Anzahl der Schalter S pro Schalteinheit SH1 und SH2 bzw. Schalteinrichtung SR1 und SR2 von Längsspannungsquelle zu Längsspannungsquelle jeweils um einen Schalter S ansteigt. Durch diese Maßnahme wird erreicht, dass die Spannungsfestigkeit der Schalteinrichtungen und Schalteinheiten der Längsspannungsquellen der Längsspannungsquellenkaskade LQK von Längsspannungsquelle zu Längsspannungsquelle jeweils um die Sperrspannung des Energiespeichers 11 der Längsspannungsquellen 10 ansteigt.

Das Gleichstromübertragungssystem 20 gemäß Figur 7 weist darüber hinaus eine Längsspannungsquelle 40 auf, wie sie aus dem Stand der Technik, bekannt ist.

Im Übrigen gelten die obigen Ausführungen im Zusammenhang mit den Figuren 1 bis 6 für das Gleichstromübertragungssystem 20 gemäß Figur 7 entsprechend.

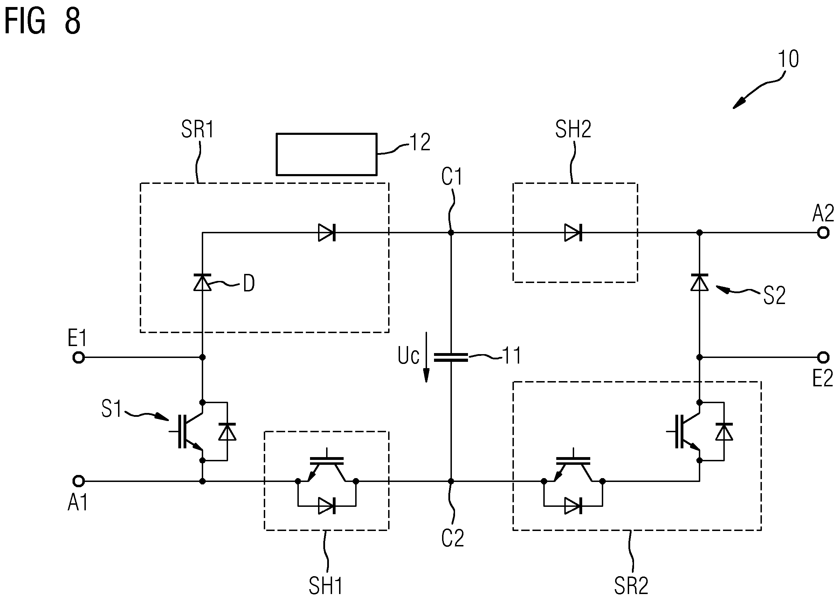

Die Figur 8 zeigt eine Ausführungsvariante für die Längsspannungsquelle 10 gemäß Figur 5. Es lässt sich erkennen, dass bei der Längsspannungsquelle 10 gemäß Figur 8 die Schalter S der ersten Schalteinrichtung SR1, der Schalter S der zweiten Schalteinheit SH2 und der zweite Schalter S2 lediglich durch ein nicht steuerbares Ventil in Form einer Diode D gebildet sind; an einem parallel geschalteten Transistor fehlt es im Unterschied zum Ausführungsbeispiel gemäß Figur 5. Der parallel geschaltete Transistor kann bei der ersten Schalteinrichtung SR1, der zweiten Schalteinheit SH2 und dem zweiten Schalter S2 bei der Längsspannungsquelle 10 gemäß Figur 5 entfallen, da der jeweilige Stromfluss in allen Schaltzuständen der Längsspannungsquelle stets in Durchlassrichtung der Dioden ist.

Im Übrigen gelten die Erläuterungen im Zusammenhang mit der Figur 5 für die Variante gemäß Figur 8 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Längsspannungsquelle
- 10': Längsspannungsquelle
- 11: Energiespeicher
- 12: Steuereinrichtung
- 20: Gleichstromübertragungssystem
- 21: Hochspannungsgleichstromübertragungsleitung
- 22: Hochspannungsgleichstromübertragungsleitung
- 23: Einspeiseleitung
- 30: Umpoleinrichtung
- 30a: Leiteranschlusskontakt
- 30b: Leiteranschlusskontakt
- 31: Schalter
- 32: Schalter
- 33: Schalter
- 34: Schalter
- 40: Längsspannungsquelle
- A1: Ausgangsanschluss
- A2: Ausgangsanschluss
- C: Kondensator
- C1: Anschluss
- C2: Anschluss
- D: Diode
- E1: Einspeiseanschluss
- E2: Einspeiseanschluss
- I1: Strom
- I2: Strom
- Iin: Eingangsstrom
- Ka1: Ausgang
- Ka2: Ausgang
- Ke1: Eingang
- Ke2: Eingang
- LQK: Längsspannungsquellenkaskade
- M1: Mittenanschluss
- M2: Mittenanschluss
- P1: Strompfad
- P2: Strompfad
- R1: Reihenschaltung
- R2: Reihenschaltung
- S: Schalter
- S1: Schalter
- S2: Schalter
- SH1: Schalteinheit
- SH2: Schalteinheit
- SR1: Schalteinrichtung
- SR2: Schalteinrichtung
- T: Transistor
- Uc: Spannung

## Patentansprüche

1. Anordnung mit einer schaltbaren Längsspannungsquelle (10, 10'), wobei die Längsspannungsquelle (10, 10') einen ersten Einspeiseanschluss (E1) zum Einspeisen eines ersten Stromes (I1), einen ersten Ausgangsanschluss (A1) zum Ausgeben des ersten Stromes (I1), einen zweiten Einspeiseanschluss (E2) zum Einspeisen eines zweiten Stromes (I2), und einen zweiten Ausgangsanschluss (A2) zum Ausgeben des zweiten Stromes (I2), aufweist, wobei die Längsspannungsquelle geeignet ist, eine elektrische Spannung (Uc) eines elektrischen Energiespeichers (11) der Längsspannungsquelle wahlweise zwischen den ersten Einspeiseanschluss und den ersten Ausgangsanschluss oder zwischen den zweiten Einspeiseanschluss und den zweiten Ausgangsanschluss zu schalten, wobei
- der erste Einspeiseanschluss (E1) mittels einer ersten Schalteinrichtung (SR1) mit einem ersten Anschluss (C1) des Energiespeichers (11) verbindbar ist,
- der zweite Einspeiseanschluss (E2) mittels einer zweiten Schalteinrichtung (SR2) mit einem zweiten Anschluss (C2) des Energiespeichers (11) verbindbar ist,
- an den ersten Einspeiseanschluss (E1) eine erste Reihenschaltung (R1) angeschlossen ist, die einen ersten Schalter (S1) und eine erste Schalteinheit (SH1) umfasst und den ersten Einspeiseanschluss mit dem zweiten Anschluss (C2) des Energiespeichers (11) verbindet,
- ein erster Anschluss des ersten Schalters (S1) einen äußeren Anschluss der ersten Reihenschaltung (R1) sowie den ersten Einspeiseanschluss bildet und ein erster Anschluss der ersten Schalteinheit (SH1) einen zweiten äußeren Anschluss der ersten Reihenschaltung (R1) bildet und mit dem zweiten Anschluss (C2) des Energiespeichers (11) verbunden ist und zwischen dem zweiten Anschluss des ersten Schalters (S1) und dem zweiten Anschluss der ersten Schalteinheit (SH1) elektrisch ein Mittenanschluss (M1) der ersten Reihenschaltung (R1) liegt,
- an den zweiten Einspeiseanschluss eine zweite Reihenschaltung (R2) angeschlossen ist, die einen zweiten Schalter (S2) und eine zweite Schalteinheit (SH2) umfasst und den zweiten Einspeiseanschluss (E2) mit dem ersten Anschluss (C1) des Energiespeichers (11) verbindet,
- ein erster Anschluss des zweiten Schalters (S2) einen äußeren Anschluss der zweiten Reihenschaltung (R2) sowie den zweiten Einspeiseanschluss (E2) bildet und ein erster Anschluss der zweiten Schalteinheit (SH2) einen zweiten äußeren Anschluss der zweiten Reihenschaltung (R2) bildet und mit dem ersten Anschluss (C1) des Energiespeichers (11) verbunden ist und zwischen dem zweiten Anschluss des zweiten Schalters (S2) und dem zweiten Anschluss der zweiten Schalteinheit (SH2) elektrisch ein Mittenanschluss (M2) der zweiten Reihenschaltung (R2) liegt, und wobei
- der Mittenanschluss (M1) der ersten Reihenschaltung (R1)
unmittelbar den ersten Ausgangsanschluss (A1) bildet und der Mittenanschluss (M2) der zweiten Reihenschaltung (R2) unmittelbar den zweiten Ausgangsanschluss (A2) bildet,
**dadurch gekennzeichnet, dass** der Längsspannungsquelle eine Umpoleinrichtung (30) nachgeordnet ist, die zwischen die zwei Ausgangsanschlüsse (A1, A2) und zwei Leiteranschlusskontakte (30a, 30b) der Längsspannungsquelle (10) geschaltet ist,
- wobei die Umpoleinrichtung (30) in einer ersten Stellung den ersten Ausgangsanschluss (A1) mit dem ersten Leiteranschlusskontakt (30a) und den zweiten Ausgangsanschluss (A2) mit dem zweiten Leiteranschlusskontakt (30b) verbindet und
- wobei die Umpoleinrichtung (30) in einer zweiten Stellung den ersten Ausgangsanschluss (A1) mit dem zweiten Leiteranschlusskontakt (30b) und den zweiten Ausgangsanschluss (A2) mit dem ersten Leiteranschlusskontakt (30a) verbindet.

2. Anordnung mit einer schaltbaren Längsspannungsquelle (10, 10') nach Anspruch 1,
**dadurch gekennzeichnet, dass**
die zweite Schalteinrichtung (SR2), die erste Schalteinheit (SH1) und der erste Schalter (S1) jeweils durch ein steuerbares Ventil gebildet ist oder ein oder mehrere steuerbare Ventile aufweist.

3. Anordnung mit einer schaltbaren Längsspannungsquelle (10, 10') nach einem der voranstehenden Ansprüche,
**dadurch gekennzeichnet, dass**
der erste (S1) und zweite Schalter (S2), die erste und zweite Schalteinheit (SH1, SH2) und die erste und zweite Schalteinrichtung (SR1, SR2) jeweils unipolar schaltend sind.

4. Anordnung mit einer schaltbaren Längsspannungsquelle (10, 10') nach einem der voranstehenden Ansprüche,
**dadurch gekennzeichnet, dass**
- Schalter (S) der ersten Schalteinrichtung (SR1) mit dem oder den Schaltern (S) der zweiten Schalteinheit (SH2) baugleich sind oder
- Schalter (S) der ersten Schalteinrichtung (SR1) mit dem zweiten Schalter (S2) baugleich sind oder
- Schalter (S) der zweiten Schalteinheit (SH2) mit dem zweiten Schalter (S2) baugleich sind.

5. Anordnung mit einer schaltbaren Längsspannungsquelle (10, 10') nach einem der voranstehenden Ansprüche,
**dadurch gekennzeichnet, dass**
- die erste und zweite Schalteinheit (SH1, SH2) jeweils durch einen Schalter oder zwei oder mehr in Reihe liegende Schalter gebildet ist,
- die erste und zweite Schalteinrichtung (SR1, SR2) jeweils durch zwei oder mehr in Reihe liegende Schalter gebildet ist,
- die erste und zweite Schalteinrichtung (SR1, SR2) jeweils einen Schalter mehr aufweisen als die erste und zweite Schalteinheit (SH1, SH2) und
- alle Schalter unipolar schaltend sind.

6. Anordnung mit einer schaltbaren Längsspannungsquelle (10, 10') nach einem der voranstehenden Ansprüche,
**dadurch gekennzeichnet, dass** zumindest einer der Schalter (S) der Längsspannungsquelle (10, 10') durch ein nichtsteuerbares Ventil, insbesondere allein durch eine Diode (D), gebildet ist.

7. Anordnung mit einer schaltbaren Längsspannungsquelle (10, 10') nach einem der voranstehenden Ansprüche,
**dadurch gekennzeichnet, dass**
- zumindest einer der Schalter, vorzugsweise alle Schalter, der ersten Schalteinrichtung (SR1), durch ein nichtsteuerbares Ventil, insbesondere eine Diode (D), gebildet ist,
- zumindest einer der Schalter, vorzugsweise alle Schalter, der zweiten Schalteinheit (SH2) durch ein nichtsteuerbares Ventil, insbesondere eine Diode (D), gebildet ist, und/oder
- der zweite Schalter (S2) durch ein nichtsteuerbares Ventil, insbesondere eine Diode (D), gebildet ist.

8. Längsspannungsquellenkaskade (LQK),
**dadurch gekennzeichnet, dass**
diese zwei oder mehr Längsspannungsquellen nach einem der voranstehenden Ansprüche aufweist.

9. Längsspannungsquellenkaskade (LQK) nach Anspruch 8,
**dadurch gekennzeichnet, dass**
- ein erster Eingang (Ke1) der Längsspannungsquellenkaskade (LQK) durch einen ersten Einspeiseanschluss (E1) der ersten Längsspannungsquelle (10) der Längsspannungsquellenkaskade (LQK) gebildet wird,
- ein zweiter Eingang (Ke2) der Längsspannungsquellenkaskade (LQK) durch einen zweiten Einspeiseanschluss (E2) der ersten Längsspannungsquelle (10) der Längsspannungsquellenkaskade (LQK) gebildet wird,
- ein erster Ausgang (Ka1) der Längsspannungsquellenkaskade (LQK) durch einen ersten Ausgangsanschluss (A1) der letzten Längsspannungsquelle (10') der Längsspannungsquellenkaskade (LQK) gebildet wird,
- ein zweiter Ausgang (Ka2) der Längsspannungsquellenkaskade (LQK) durch einen zweiten Ausganganschluss (A2) der letzten Längsspannungsquelle (10') der Längsspannungsquellenkaskade (LQK) gebildet wird,
- jeder Längsspannungsquelle mit Ausnahme der letzten jeweils eine Längsspannungsquelle nachgeordnet ist, wobei der erste Einspeiseanschluss (E1) jeder nachgeordneten Längsspannungsquelle mit dem ersten Ausgangsanschluss (A1) der vorgeordneten Längsspannungsquelle verbunden ist und der zweite Einspeiseanschluss (E2) jeder nachgeordneten Längsspannungsquelle mit dem zweiten Ausgangsanschluss (A2) der vorgeordneten Längsspannungsquelle verbunden ist.

10. Längsspannungsquellenkaskade (LQK) nach Anspruch 8 oder 9,
**dadurch gekennzeichnet, dass**
die Spannungsfestigkeit der Schalteinrichtungen und Schalteinheiten der Längsspannungsquellen der Längsspannungsquellenkaskade (LQK) von einer Längsspannungsquelle zu der nachgeordneten Längsspannungsquelle der Längsspannungsquellenkaskade (LQK) jeweils um die Sperrspannung des Energiespeichers (11) der Längsspannungsquellen ansteigt.

11. Längsspannungsquellenkaskade (LQK) nach einem der voranstehenden Ansprüche 8 bis 10,
**dadurch gekennzeichnet, dass**
die Anzahl der Schalter (S) pro Schalteinheit und Schalteinrichtung von einer Längsspannungsquelle zu der nachgeordneten Längsspannungsquelle der Längsspannungsquellenkaskade (LQK) jeweils um einen Schalter ansteigt.

12. Gleichstromübertragungssystem (20),
**dadurch gekennzeichnet, dass**
dieses zumindest mit einer Längsspannungsquelle nach einem der voranstehenden Ansprüche ausgestattet ist sowie eine erste und eine zweite Hochspannungsgleichstromübertragungsleitung (21, 22) aufweist, die an die Ausgangsanschlüsse der Längsspannungsquelle bzw. die Ausgänge der Längsspannungsquellenkaskade (LQK) angeschlossen ist, wobei der Längsspannungsquelle eine Umpoleinrichtung (30) nachgeordnet ist, die zwischen die zwei Ausgangsanschlüsse (A1, A2) und zwei Leiteranschlusskontakte (30a, 30b) der Längsspannungsquelle geschaltet ist,
- wobei die Umpoleinrichtung (30) in einer ersten Stellung den ersten Ausgangsanschluss (A1) mit dem ersten Leiteranschlusskontakt (30a) und den zweiten Ausgangsanschluss (A2) mit dem zweiten Leiteranschlusskontakt (30b) verbindet und
- wobei die Umpoleinrichtung (30) in einer zweiten Stellung den ersten Ausgangsanschluss (A1) mit dem zweiten Leiteranschlusskontakt (30b) und den zweiten Ausgangsanschluss (A2) mit dem ersten Leiteranschlusskontakt (30a) verbindet.

13. Verfahren zum Betreiben einer Längsspannungsquelle (10), einer Längsspannungsquellenkaskade (LQK) oder eines Gleichstromübertragungssystems (20) nach einem der voranstehenden Ansprüche, wobei der Energiespeicher (11) entweder zwischen den ersten Einspeiseanschluss (E1) und den ersten Ausgangsanschluss (A1) der Längsspannungsquelle oder Längsspannungsquellen oder zwischen den zweiten Einspeiseanschluss (E2) und den zweiten Ausgangsanschluss (A2) der Längsspannungsquelle oder Längsspannungsquellen geschaltet wird oder von allen diesen Anschlüssen getrennt wird.

## Claims

1. An arrangement with a switchable longitudinal voltage source (10, 10'), wherein the longitudinal voltage source (10, 10') has a first supply terminal (E1) for supplying a first current (I1), a first output terminal (A1) for outputting the first current (I1), a second supply terminal (E2) for supplying a second current (I2) and a second output terminal (A2) for outputting the second current (I2), wherein the longitudinal voltage source is suitable for selectively switching an electrical voltage (Uc) of an electrical energy store (11) of the longitudinal voltage source between the first supply terminal and the first output terminal or between the second supply terminal and the second output terminal, wherein
- the first supply terminal (E1) is connectable to a first terminal (C1) of the energy store (11) by means of a first switching device (SR1),
- the second supply terminal (E2) is connectable to a second terminal (C2) of the energy store (11) by means of a second switching device (SR2),
- a first series circuit (R1), which comprises a first switch (S1) and a first switching unit (SH1) and connects the first supply terminal to the second terminal (C2) of the energy store (11), is coupled to the first supply terminal (E1),
- a first terminal of the first switch (S1) forms an outer terminal of the first series circuit (R1) and the first supply terminal, and a first terminal of the first switching unit (SH1) forms a second outer terminal of the first series circuit (R1) and is connected to the second terminal (C2) of the energy store (11), and a centre terminal (M1) of the first series circuit (R1) lies electrically between the second terminal of the first switch (S1) and the second terminal of the first switching unit (SH1),
- a second series circuit (R2), which comprises a second switch (S2) and a second switching unit (SH2) and connects the second supply terminal (E2) to the first terminal (C1) of the energy store (11), is coupled to the second supply terminal,
- a first terminal of the second switch (S2) forms an outer terminal of the second series circuit (R2) and the second supply terminal (E2), and a first terminal of the second switching unit (SH2) forms a second outer terminal of the second series circuit (R2) and is connected to the first terminal (C1) of the energy store (11), and a centre terminal (M2) of the second series circuit (R2) lies electrically between the second terminal of the second switch (S2) and the second terminal of the second switching unit (SH2), and wherein
- the centre terminal (M1) of the first series circuit (R1) directly forms the first output terminal (A1), and the centre terminal (M2) of the second series circuit (R2) directly forms the second output terminal (A2),
**characterised in that**
a polarity reversal device (30) is arranged downstream of the longitudinal voltage source and is switched between the two output terminals (A1, A2) and two conductor terminal contacts (30a, 30b) of the longitudinal voltage source (10),
- wherein, in a first position, the polarity reversal device (30) connects the first output terminal (A1) to the first conductor terminal contact (30a) and the second output terminal (A2) to the second conductor terminal contact (30b), and
- wherein, in a second position, the polarity reversal device (30) connects the first output terminal (A1) to the second conductor terminal contact (30b) and the second output terminal (A2) to the first conductor terminal contact (30a).

2. The arrangement with a switchable longitudinal voltage source (10, 10') according to claim 1,
**characterised in that**
the second switching device (SR2), the first switching unit (SH1) and the first switch (S1) are each formed by a controllable valve or have one or more controllable valves.

3. The arrangement with a switchable longitudinal voltage source (10, 10') according to any one of the preceding claims,
**characterised in that**
the first (S1) and second switches (S2), the first and second switching units (SH1, SH2) and the first and second switching devices (SR1, SR2) are each unipolarly switching.

4. The arrangement with a switchable longitudinal voltage source (10, 10') according to any one of the preceding claims,
**characterised in that**
- switches (S) of the first switching device (SR1) are structurally identical to the one or more switches (S) of the second switching unit (SH2), or
- switches (S) of the first switching device (SR1) are structurally identical to the second switch (S2), or
- switches (S) of the second switching unit (SH2) are structurally identical to the second switch (S2).

5. The arrangement with a switchable longitudinal voltage source (10, 10') according to any one of the preceding claims,
**characterised in that**
- the first and second switching units (SH1, SH2) are each formed by a switch or two or more switches lying in series,
- the first and second switching devices (SR1, SR2) are each formed by two or more switches lying in series,
- the first and second switching devices (SR1, SR2) each have one switch more than the first and second switching units (SH1, SH2), and
- all switches are unipolarly switching.

6. The arrangement with a switchable longitudinal voltage source (10, 10') according to any one of the preceding claims,
**characterised in that**
at least one of the switches (S) of the longitudinal voltage source (10, 10') is formed by a non-controllable valve, in particular solely by a diode (D).

7. The arrangement with a switchable longitudinal voltage source (10, 10') according to any one of the preceding claims,
**characterised in that**
- at least one of the switches, preferably all switches, of the first switching device (SR1) is formed by a non-controllable valve, in particular a diode (D),
- at least one of the switches, preferably all switches, of the second switching unit (SH2) is formed by a non-controllable valve, in particular a diode (D), and/or
- the second switch (S2) is formed by a non-controllable valve, in particular a diode (D).

8. A longitudinal voltage source cascade (LQK),
**characterised in that** it has two or more longitudinal voltage sources according to any one of the preceding claims.

9. The longitudinal voltage source cascade (LQK) according to claim 8,
**characterised in that**
- a first input (Ke1) of the longitudinal voltage source cascade (LQK) is formed by a first supply terminal (E1) of the first longitudinal voltage source (10) of the longitudinal voltage source cascade (LQK),
- a second input (Ke2) of the longitudinal voltage source cascade (LQK) is formed by a second supply terminal (E2) of the first longitudinal voltage source (10) of the longitudinal voltage source cascade (LQK),
- a first output (Ka1) of the longitudinal voltage source cascade (LQK) is formed by a first output terminal (A1) of the last longitudinal voltage source (10') of the longitudinal voltage source cascade (LQK),
- a second output (Ka2) of the longitudinal voltage source cascade (LQK) is formed by a second output terminal (A2) of the last longitudinal voltage source (10') of the longitudinal voltage source cascade (LQK),
- downstream of each longitudinal voltage source, with the exception of the last one, one longitudinal voltage source is arranged in each case, wherein the first supply terminal (E1) of each downstream longitudinal voltage source is connected to the first output terminal (A1) of the upstream longitudinal voltage source and the second supply terminal (E2) of each downstream longitudinal voltage source is connected to the second output terminal (A2) of the upstream longitudinal voltage source.

10. The longitudinal voltage source cascade (LQK) according to claim 8 or 9,
**characterised in that**
the withstand voltage of the switching devices and switching units of the longitudinal voltage sources of the longitudinal voltage source cascade (LQK) increases from each longitudinal voltage source to the downstream longitudinal voltage source of the longitudinal voltage source cascade (LQK) by the blocking voltage of the energy store (11) of the longitudinal voltage sources.

11. The longitudinal voltage source cascade (LQK) according to any one of the preceding claims 8 to 10,
**characterised in that**
the number of the switches (S) per switching unit and switching device increases from each longitudinal voltage source to the downstream longitudinal voltage source of the longitudinal voltage source cascade (LQK) by one switch.

12. A DC transmission system (20),
**characterised in that**
it is equipped at least with a longitudinal voltage source according to any one of the preceding claims and has first and second high-voltage DC transmission lines (21, 22) which are coupled to the output terminals of the longitudinal voltage source or the outputs of the longitudinal voltage source cascade (LQK), wherein a polarity reversal device (30) is arranged downstream of the longitudinal voltage source and is switched between the two output terminals (A1, A2) and two conductor terminal contacts (30a, 30b) of the longitudinal voltage source,
- wherein, in a first position, the polarity reversal device (30) connects the first output terminal (A1) to the first conductor terminal contact (30a) and the second output terminal (A2) to the second conductor terminal contact (30b), and
- wherein, in a second position, the polarity reversal device (30) connects the first output terminal (A1) to the second conductor terminal contact (30b) and the second output terminal (A2) to the first conductor terminal contact (30a).

13. A method for operating a longitudinal voltage source (10), a longitudinal voltage source cascade (LQK) or a DC transmission system (20) according to any one of the preceding claims, wherein the energy store (11) is switched either between the first supply terminal (E1) and the first output terminal (A1) of the longitudinal voltage source or longitudinal voltage sources or between the second supply terminal (E2) and the second output terminal (A2) of the longitudinal voltage source or longitudinal voltage sources or is disconnected from all these terminals.

## Revendications

1. Agencement comportant une source de tension série (10, 10') commutable, dans lequel la source de tension série (10, 10') présente une première borne d'injection (E1) pour l'injection d'un premier courant (I1), une première borne de sortie (A1) pour la sortie du premier courant (I1), une deuxième borne d'injection (E2) pour l'injection d'un deuxième courant (I2), et une deuxième borne de sortie (A2) pour la sortie du deuxième courant (I2), dans lequel la source de tension série est apte à commuter une tension électrique (Uc) d'un accumulateur d'énergie électrique (11) de la source de tension série sélectivement entre la première borne d'injection et la première borne de sortie ou entre la deuxième borne d'injection et la deuxième borne de sortie, dans lequel
- la première borne d'injection (E1) peut être reliée à une première borne (C1) de l'accumulateur d'énergie (11) au moyen d'un premier dispositif de commutation (SR1),
- la deuxième borne d'injection (E2) peut être reliée à une deuxième borne (C2) de l'accumulateur d'énergie (11) au moyen d'un deuxième dispositif de commutation (SR2),
- un premier montage en série (R1), qui comprend un premier commutateur (S1) et une première unité de commutation (SH1), est raccordé à la première borne d'injection (E1) et relie la première borne d'injection à la deuxième borne (C2) de l'accumulateur d'énergie (11),
- une première borne du premier commutateur (S1) forme une borne extérieure du premier montage en série (R1) ainsi que la première borne d'injection (E1), et une première borne de la première unité de commutation (SH1) forme une deuxième borne extérieure du premier montage en série (R1) et est reliée à la deuxième borne (C2) de l'accumulateur d'énergie (11), et une borne médiane (M1) du premier montage en série (R1) est située électriquement entre la deuxième borne du premier commutateur (S1) et la deuxième borne de la première unité de commutation (SH1),
- un deuxième montage en série (R2), qui comprend un deuxième commutateur (S2) et une deuxième unité de commutation (SH2), est raccordé à la deuxième borne d'injection (E2) et relie la deuxième borne d'injection à la première borne (C1) de l'accumulateur d'énergie (11),
- une première borne du deuxième commutateur (S2) forme une borne extérieure du deuxième montage en série (R2) ainsi que la deuxième borne d'injection (E2), et une première borne de la deuxième unité de commutation (SH2) forme une deuxième borne extérieure du deuxième montage en série (R2) et est reliée à la première borne (C1) de l'accumulateur d'énergie (11), et une borne médiane (M2) du deuxième montage en série (R2) est située électriquement entre la deuxième borne du deuxième commutateur (S2) et la deuxième borne de la deuxième unité de commutation (SH2), et dans lequel
- la borne médiane (M1) du premier montage en série (R1)
constitue directement la première borne de sortie (A1), et la borne médiane (M2) du deuxième montage en série (R2) constitue directement la deuxième borne de sortie (A2),
**caractérisé en ce que**
un dispositif d'inversion de polarité (30) est disposé en aval de la source de tension série, lequel est monté entre les deux bornes de sortie (A1, A2) et deux contacts de raccordement de conducteur (30a, 30b) de la source de tension série (10),
- dans lequel le dispositif d'inversion de polarité (30), dans une première position, relie la première borne de sortie (A1) au premier contact de raccordement de conducteur (30a) et la deuxième borne de sortie (A2) au deuxième contact de raccordement de conducteur (30b), et
- dans lequel le dispositif d'inversion de polarité (30), dans une deuxième position, relie la première borne de sortie (A1) au deuxième contact de raccordement de conducteur (30b) et la deuxième borne de sortie (A2) au premier contact de raccordement de conducteur (30a).

2. Agencement comportant une source de tension série (10, 10') commutable selon la revendication 1,
**caractérisé en ce que**
le deuxième dispositif de commutation (SR2), la première unité de commutation (SH1) et le premier commutateur (S1) sont chacun constitués par une valve commandable ou présentent une ou plusieurs valves commandables.

3. Agencement comportant une source de tension série (10, 10') commutable selon l'une quelconque des revendications précédentes,
**caractérisé en ce que**
les premier (S1) et deuxième (S2) commutateurs, les première et deuxième unités de commutation (SH1, SH2) et les premier (SR1) et deuxième (SR2) dispositifs de commutation sont chacun à commutation unipolaire.

4. Agencement comportant une source de tension série (10, 10') commutable selon l'une quelconque des revendications précédentes, **caractérisé en ce que**
- les commutateurs (S) du premier dispositif de commutation (SR1) sont de construction identique à celle du ou des commutateurs (S) de la deuxième unité de commutation (SH2) ou
- les commutateurs (S) du premier dispositif de commutation (SR1) sont de construction identique à celle du deuxième commutateur (S2), ou
- les commutateurs (S) de la deuxième unité de commutation (SH2) sont de construction identique à celle du deuxième commutateur (S2).

5. Agencement comportant une source de tension série (10, 10') commutable selon l'une quelconque des revendications précédentes, **caractérisé en ce que**
- les première et deuxième unités de commutation (SH1, SH2) sont chacune constituées par un commutateur ou par deux ou plusieurs commutateurs montés en série,
- les premier et deuxième dispositifs de commutation (SR1, SR2) sont chacun constitués par deux ou plusieurs commutateurs montés en série,
- les premier et deuxième dispositifs de commutation (SR1, SR2) présentent chacun un commutateur de plus que les première et deuxième unités de commutation (SH1, SH2), et
- tous les commutateurs sont à commutation unipolaire.

6. Agencement comportant une source de tension série (10, 10') commutable selon l'une quelconque des revendications précédentes,
**caractérisé en ce que**
au moins l'un des commutateurs (S) de la source de tension série (10, 10') est constitué par une valve non commandable, en particulier uniquement par une diode (D).

7. Agencement comportant une source de tension série (10, 10') commutable selon l'une quelconque des revendications précédentes, **caractérisé en ce que**
- au moins l'un des commutateurs, de préférence tous les commutateurs, du premier dispositif de commutation (SR1) est constitué par une valve non commandable, en particulier une diode (D),
- au moins l'un des commutateurs, de préférence tous les commutateurs, de la deuxième unité de commutation (SH2) est constitué par une valve non commandable, en particulier une diode (D), et/ou
- le deuxième commutateur (S2) est constitué par une valve non commandable, en particulier une diode (D).

8. Cascade de sources de tension série (LQK),
**caractérisée en ce que** celle-ci présente deux ou plusieurs sources de tension série selon l'une quelconque des revendications précédentes.

9. Cascade de sources de tension série (LQK) selon la revendication 8,
**caractérisée en ce que**
- une première entrée (Ke1) de la cascade de sources de tension série (LQK) est constituée par une première borne d'injection (E1) de la première source de tension série (10) de la cascade de sources de tension série (LQK),
- une deuxième entrée (Ke2) de la cascade de sources de tension série (LQK) est constituée par une deuxième borne d'injection (E2) de la première source de tension série (10) de la cascade de sources de tension série (LQK),
- une première sortie (Ka1) de la cascade de sources de tension série (LQK) est constituée par une première borne de sortie (A1) de la dernière source de tension série (10') de la cascade de sources de tension série (LQK),
- une deuxième sortie (Ka2) de la cascade de sources de tension série (LQK) est constituée par une deuxième borne de sortie (A2) de la dernière source de tension série (10') de la cascade de sources de tension série (LQK),
- chaque source de tension série, à l'exception de la dernière, est respectivement suivie d'une source de tension série, dans laquelle la première borne d'injection (E1) de chaque source de tension série suivante est reliée à la première borne de sortie (A1) de la source de tension série précédente, et la deuxième borne d'injection (E2) de chaque source de tension série suivante est reliée à la deuxième borne de sortie (A2) de la source de tension série précédente.

10. Cascade de sources de tension série (LQK) selon la revendication 8 ou 9,
**caractérisée en ce que**
la tenue en tension des dispositifs de commutation et des unités de commutation des sources de tension série de la cascade de sources de tension série (LQK) augmente, d'une source de tension série à la source de tension série suivante de la cascade de sources de tension série (LQK), à chaque fois de la valeur de la tension de blocage de l'accumulateur d'énergie (11) des sources de tension série.

11. Cascade de sources de tension série (LQK) selon l'une quelconque des revendications précédentes 8 à 10,
**caractérisée en ce que**
le nombre de commutateurs (S) par unité de commutation et par dispositif de commutation augmente d'un commutateur, d'une source de tension série à la source de tension série suivante de la cascade de sources de tension série (LQK).

12. Système de transmission en courant continu (20),
**caractérisé en ce que**
celui-ci est équipé d'au moins une source de tension série selon l'une des revendications précédentes et présente une première et une deuxième ligne de transmission en courant continu haute tension (21, 22) qui sont raccordées aux bornes de sortie de la source de tension série ou, selon le cas, aux sorties de la cascade de sources de tension série (LQK), dans lequel un dispositif d'inversion de polarité (30) est disposé en aval de la source de tension série, lequel est monté entre les deux bornes de sortie (A1, A2) et deux contacts de raccordement de conducteur (30a, 30b) de la source de tension série,
- dans lequel le dispositif d'inversion de polarité (30), dans une première position, relie la première borne de sortie (A1) au premier contact de raccordement de conducteur (30a) et la deuxième borne de sortie (A2) au deuxième contact de raccordement de conducteur (30b), et
- dans lequel le dispositif d'inversion de polarité (30), dans une deuxième position, relie la première borne de sortie (A1) au deuxième contact de raccordement de conducteur (30b) et la deuxième borne de sortie (A2) au premier contact de raccordement de conducteur (30a).

13. Procédé de fonctionnement d'une source de tension série (10), d'une cascade de sources de tension série (LQK) ou d'un système de transmission en courant continu (20) selon l'une des revendications précédentes, dans lequel l'accumulateur d'énergie (11) est monté soit entre la première borne d'injection (E1) et la première borne de sortie (A1) de la source ou des sources de tension série, soit entre la deuxième borne d'injection (E2) et la deuxième borne de sortie (A2) de la source ou des sources de tension série, ou est séparé de toutes ces bornes.
